# EUROPÄISCHE PATENTSCHRIFT

(11) **EP 2 801 525 B1**
(45) Veröffentlichungstag und Bekanntmachung des Hinweises auf die Patenterteilung: **02.11.2016**
(21) Anmeldenummer: 14167516.5
(22) Anmeldetag: 08.05.2014
(51) Int. Cl.: B64D 11/00

(54) **Lagermodul sowie Gepäckfachbaugruppe für ein Flugzeug**
Bearing module and luggage compartment assembly for an aircraft
Module de roulement et bloc de compartiments à bagages pour un avion

(30) Priorität: 08.05.2013 DE 202013102022 U
(43) Veröffentlichungstag der Anmeldung: 12.11.2014
(73) Patentinhaber: RO-RA Aviation Systems GmbH, 4862 Schörfling a. Attersee (AT)
(72) Erfinder: Haller, Matthias, 4862 Schörfling (AT)
(74) Vertreter: Lösch, Christoph Ludwig Klaus

(56) Entgegenhaltungen:
- US-A1- 2006 151 668
- US-A1- 2008 112 754
- US-A1- 2010 021 096

## Beschreibung

Die Erfindung betrifft ein Lagermodul zur drehbaren Lagerung eines Gepäckfachbehälters in einem Gepäckfachgehäuse um eine Schwenkachse, insbesondere zur drehbaren Lagerung eines Flugzeug-Gepäckfachbehälters in einem Flugzeug-Gepäckfachgehäuse. Eine ähnliche Vorrichtung ist aus dem Dokument US2006/0151668 bekannt. Ferner betrifft die Erfindung eine Gepäckfachbaugruppe für ein Flugzeug.

Der Erfindung liegt die Aufgabe zugrunde, ein Lagermodul sowie eine Gepäckfachgruppe zu schaffen, die eine montagefreundliche Verbindung zwischen Gepäckfachbehälter und Gepäckfachgehäuse ermöglicht.

Diese Aufgabe wird für das Lagermodul durch die Merkmale des Schutzanspruchs 1 und für die Gepäckfachbaugruppe durch die Merkmale des Schutzanspruchs 9 gelöst. Vorteilhafte Ausführungsformen sind in den Unteransprüchen beschrieben.

Erfindungsgemäß besitzt das Lagermodul zur drehbaren Lagerung eines Gepäckfachbehälters in einem Gepäckfachgehäuse um eine Schwenkachse einen gehäuseseitigen Lagerblock, welcher drehfest mit dem Gepäckfachgehäuse verbindbar ist und welcher eine Lagertasche aufweist, ein Zwischenelement, welches eine Zunge zum Eingriff in die Lagertasche des gehäuseseitigen Lagerblocks und eine erste Gleitfläche aufweist, einen behälterseitigen Lagerblock, welcher drehfest mit dem Gepäckfachbehälter verbindbar ist und welcher eine zweite Gleitfläche aufweist, wobei die erste Gleitfläche und die zweite Gleitfläche ein radiales Gleitlager bilden, und eine Fixierschraube zur Verschraubung des Zwischenelements mit dem gehäuseseitigen Lagerblock.

Durch ein derartiges Lagermodul ist es möglich, in einem ersten Montageschritt den Gepäckfachbehälter und das Gepäckfachgehäuse zunächst durch den Eingriff der Zunge des Zwischenelementes in die Lagertasche des gehäuseseitigen Lagerblocks vorläufig zu fixieren. Anschließend kann in einem weiteren Montageschritt die endgültige Fixierung durch die Fixierschraube erfolgen. Durch das vorangehende Einhängen des Gepäckfachbehälters in das Gepäckfachgehäuse wird die endgültige Fixierung erleichtert. Insbesondere ist zur endgültigen Fixierung nur eine einzige Person nötig, was die Montagefreundlichkeit erhöht.

In einer vorteilhaften Ausführungsform ist zwischen der Lagertasche des gehäuseseitigen Lagerblocks und der Zunge des Zwischenelements eine Einrast-, Schnapp-, und/oder Clipverbindung ausgebildet. Derartige Verbindungen sorgen für eine besonders sichere vorläufige Fixierung und erhöhen dadurch die Montagefreundlichkeit. Insbesondere ist eine Ein-Mann-Installation des Gepäckfaches gewährleistet.

In einer bevorzugten Ausführungsform weist die Fixierschraube eine in Richtung der Schwenkachse verlaufende Längsachse, insbesondere eine parallel zur Schwenkachse verlaufende Längsachse, auf. Auf diese Weise ist eine besonders sichere endgültige Fixierung des Gepäckfachbehälters möglich.

In einer vorteilhaften Ausführungsform ist die Fixierschraube in einem Gewindeeinsatz des gehäuseseitigen Lagerblocks eingeschraubt. Dies erhöht die Verbindungsfestigkeit zwischen dem Gepäckfachbehälter und dem Gepäckfachgehäuses.

In einer weiteren vorteilhaften Ausführungsform ist die Fixierschraube mit einem Federelement vorgespannt, was die Verbindungsfestigkeit weiter erhöht.

In einer bevorzugten Ausführungsform ist die erste Gleitfläche als außenliegende Mantelfläche eines Ringelements des Zwischenelements ausgebildet und/oder die zweite Gleitfläche ist als innenliegende Mantelfläche eines Ringelements des behälterseitigen Lagerblocks ausgebildet. Durch eine derartige Ausbildung ist ein kleinbauendes Lagermodul möglich, das zugleich ein müheloses Schwenken des Gepäckfachbehälters um die Schwenkachse ermöglicht.

Zur zuverlässigen Arretierung des Lagermoduls kann am behälterseitigen Lagerblock ein Sicherungsring angebracht sein.

Als besonders vorteilhaft hat sich ein gehäuseseitiger Lagerblock, ein Zwischenelement und/oder ein behälterseitiger Lagerblock aus einem thermoplastischen Polymerwerkstoff, insbesondere aus einem glasfasergefüllten Polyphenylensulfid, herausgestellt.

Die erfindungsgemäße Gepäckfachbaugruppe für ein Flugzeug weist einen Gepäckfachbehälter, ein Gepäckfachgehäuse und mindestens ein Lagermodul zur drehbaren Lagerung des Gepäckfachbehälters in dem Gepäckfachgehäuse um eine Schwenkachse auf.

Die Erfindung ist anhand eines Ausführungsbeispieles in den Zeichnungsfiguren weiter erläutert. Es zeigen:
- Fig. 1: eine perspektivische Ansicht einer Gepäckfachbaugruppe mit Gepäckfachbehälter, Gepäckfachgehäuse und zwei Lagermodulen;
- Fig. 2: eine perspektivische Ansicht eines Lagermoduls;
- Fig. 3: eine Explosionsdarstellung des Lagermoduls aus Fig. 2;
- Fig. 4: eine Seitenansicht der Gepäckfachbaugruppe aus Fig. 1;
- Fig. 5: eine vergrößerte Schnittansicht entlang der Schnittebene A - A in Fig. 4, wobei sich das Lagermodul in einem vorläufig fixierten Zustand befindet; und
- Fig. 6: eine vergrößerte Schnittansicht entlang der Schnittebene A - A in Fig. 4, wobei sich das Lagermodul in einem endgültig fixierten Zustand befindet.

Gleiche Bauteile werden in den Zeichnungsfiguren jeweils mit gleichen Bezugszeichen versehen.

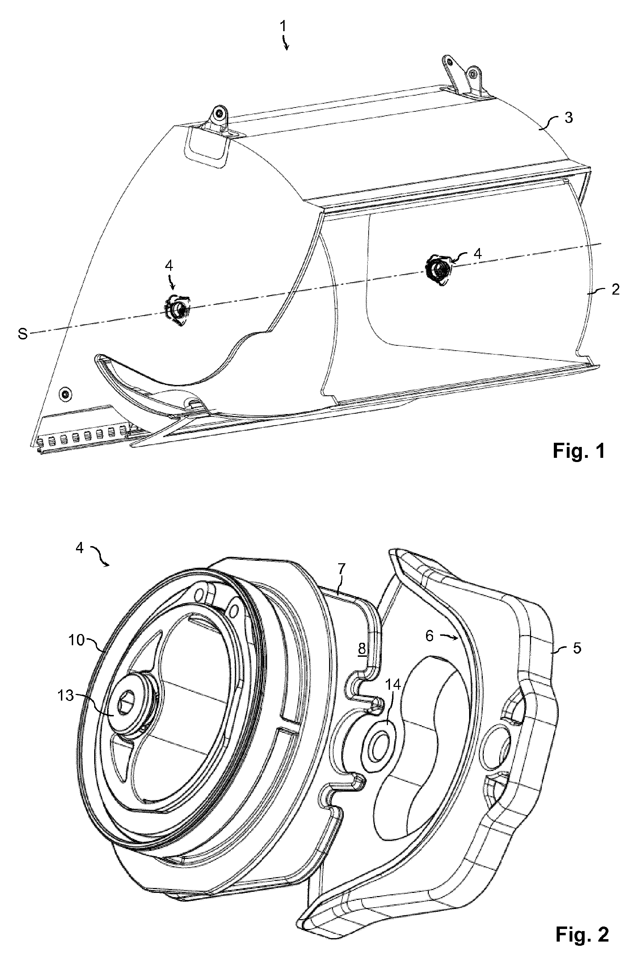

Fig. 1 zeigt eine Gepäckfachbaugruppe 1 für ein Flugzeug. Die Gepäckfachbaugruppe 1 besteht aus einem Gepäckfachbehälter 2, einem Gepäckfachgehäuse 3 und zwei Lagermodulen 4. Der Gepäckfachbehälter 2 dient zur Aufbewahrung von Handgepäck in Flugzeugen und ist beispielsweise oberhalb der Sitzplätze in der Passagierkabine eines Flugzeuges platziert. Der Gepäckfachbehälter 2 ist über zwei Lagermodule 4 im Gepäckfachgehäuse 3 drehbar gelagert. Durch Drehen um die Schwenkachse S kann der Gepäckfachbehälter 2 geschlossen bzw. geöffnet werden. In Fig. 1 ist der Gepäckfachbehälter 2 im geöffneten Zustand gezeigt. Das Gepäckfachgehäuse 3 ist über entsprechende Aufhängevorrichtungen mit in den Figuren nicht näher dargestellten Strukturkomponenten des Flugzeugrumpfes verbunden.

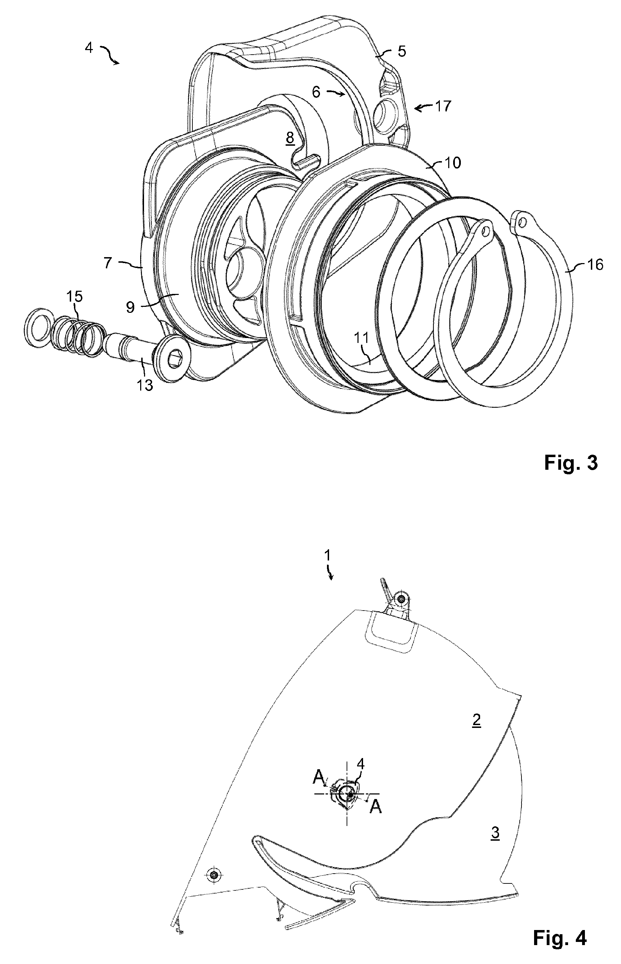

Fig. 2 zeigt eine perspektivische Ansicht des Lagermoduls 4 und Fig. 3 eine Explosionsdarstellung des Lagermoduls 4. Das Lagermodul 4 besteht aus einem gehäuseseitigen Lagerblock 5, einem Zwischenelement 7 und einem behälterseitigen Lagerblock 10. Der gehäuseseitige Lagerblock 5, das Zwischenelement 7 und der behälterseitige Lagerblock 10 bestehen aus glasfasergefülltem Polyphenylensulfid.

Der gehäuseseitige Lagerblock 5 ist drehfest, z.B. durch eine Klebe- oder Schraubverbindung, mit dem Gepäckfachgehäuse 3 verbunden. Der gehäuseseitige Lagerblock 5 weist eine Lagertasche 6 auf. Ferner ist ein metallischer Gewindeeinsatz 14 in den gehäuseseitigen Lagerblock 5 eingelassen.

Das Zwischenelement 7 weist eine Zunge 8 auf, die derart ausgebildet ist, dass sie in Eingriff in die Lagertasche 6 gebracht werden kann. Ferner weist die Zunge ein erstes Clipelement auf, das in ein korrespondierendes Clipelement der Lagertasche 6 eingeclipt werden kann. Die Lagertasche 6 und die Zunge 8 bilden somit eine Clipverbindung 17 miteinander aus. Diese Clipverbindung 17 dient der zuverlässigen Verbindung zwischen gehäuseseitigem Lagerblock 5 und Zwischenelement 7. Das Zwischenelement 7 weist ferner ein Ringelement auf, dessen außenliegende Mantelfläche als Gleitfläche 9 ausgebildet ist.

Der behälterseitige Lagerblock 10 ist drehfest, z.B. durch eine Klebe- oder Schraubverbindung oder Presssitz, mit dem Gepäckfachbehälter 2 verbunden. Der behälterseitige Lagerblock 10 weist ein Ringelement auf, dessen innenliegende Mantelfläche als weitere Gleitfläche 11 ausgebildet ist. Gemeinsam mit der Gleitfläche 9 des Zwischenelements bildet die Gleitfläche 11 ein radiales Gleitlager 12. Mit Hilfe dieses Gleitlagers ist eine Drehung des Gepäckfachbehälters 2 relativ zum Gepäckfachgehäuse 3 - und damit das Öffnen und Schließen des Gepäckfachbehälters 2 - möglich. Die Fixierschraube 13 dient der Verschraubung des Zwischenelements 7 mit dem gehäuseseitigen Lagerblock 5. Die Fixierschraube 13 wird hierfür in ein entsprechendes Schraubenloch des Zwischenelements 7 und den Gewindeeinsatz 14 des gehäuseseitigen Lagerblocks 5 eingeschraubt. Die Längsachse der Fixierschraube erstreckt sich hierbei parallel zur Schwenkachse S. Ein um den Schaft der Fixierschraube 13 angeordnetes Federelement 15 wird zur Schraubensicherung durch das Einschrauben der Fixierschraube 13 vorgespannt.

Ein in eine umlaufende Nut des Zwischenelements 7 eingebrachter Sicherungsring 16 verhindert ein Verschieben des Zwischenelements 7 relativ zum behälterseitigen Lagerblock 10.

Zur Montage der Gepäckfachbaugruppe 1 wird der mit dem behälterseitigen Lagerblock 10 und dem am behälterseitigen Lagerblock 10 angebrachten Zwischenelement 7 versehene Gepäckfachbehälter 2 zunächst in das mit dem gehäuseseitigen Lagerblock 5 versehene Gepäckfachgehäuse 3 eingehängt. Genauer wird die Zunge 8 des Zwischenelements 7 in die Lagertasche 6 des gehäuseseitigen Lagerblocks 5 eingeschoben, bis sich die Clipverbindung 17 ausbildet. Auf diese Weise wird der Gepäckfachbehälter 2 bereits vorläufig relativ zum Gepäckfachgehäuse 3 fixiert.

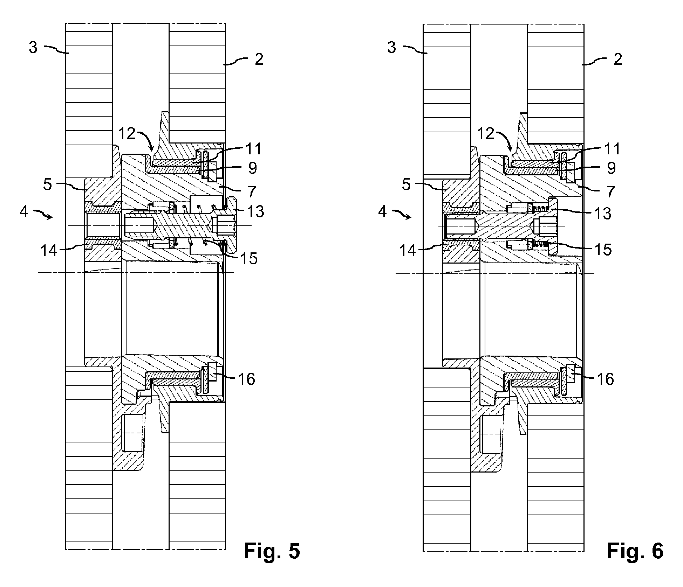

Fig. 5 zeigt einen vergrößerten Schnitt entlang der Schnittebene A - A aus Fig. 4, wobei Fig. 4 eine Seitenansicht der Gepäckfachbaugruppe 1 mit Gepäckfachbehälter 2 und Gepäckfachgehäuse 3 darstellt. In Fig. 5 ist die Gepäckfachbaugruppe 1 in dem oben erwähnten Zustand der vorläufigen Fixierung dargestellt. Der Gepäckfachbehälter 2 ist durch den Eingriff der Zunge 8 des Zwischenelements 7 in die Lagertasche 6 des gehäuseseitigen Lagerblocks 5 in das Gepäckfachgehäuse 3 eingehängt. Die Fixierschraube 13 ist noch nicht in den Lagerblock 14 eingeschraubt.

In einem anschließenden Montageschritt wird die Fixierschraube 13 in den Gewindeeinsatz 14 eingeschraubt. Dies führt zu einer endgültigen Fixierung des Gepäckfachbehälters 2 relativ zum Gepäckfachgehäuse 3. Der Zustand der endgültigen Fixierung ist in Fig. 6 dargestellt.

In dem in Fig. 6 dargestellten Zustand der endgültigen Fixierung ist der Gepäckfachbehälter 2 durch den Eingriff der Zunge 8 des Zwischenelements 7 in die Lagertasche 6 des gehäuseseitigen Lagerblocks 5 in das Gepäckfachgehäuse 3 eingehängt. Außerdem ist Fixierschraube 13 in den Lagerblock 14 eingeschraubt, was zu einer zusätzlichen Fixierung zwischen Gepäckfachbehälter 2 und Gepäckfachgehäuse 3 führt.

Durch die zunächst vorläufige Fixierung des Gepäckfachbehälters 2 mittels der Clipverbindung 17 und einer erst daran anschließenden endgültigen Fixierung durch die Fixierschraube 13 wird die Montagefreundlichkeit erhöht. Insbesondere ist eine Ein-Mann-Montage der Gepäckfachbaugruppe 1 möglich.

### BEZUGSZEICHENLISTE

- 1: Gepäckfachbaugruppe
- 2: Gepäckfachbehälter
- 3: Gepäckfachgehäuse
- 4: Lagermodul
- 5: gehäuseseitiger Lagerblock
- 6: Lagertasche
- 7: Zwischenelement
- 8: Zunge
- 9: Gleitfläche
- 10: behälterseitiger Lagerblock
- 11: Gleitfläche
- 12: Gleitlager
- 13: Fixierschraube
- 14: Gewindeeinsatz
- 15: Federelement
- 16: Sicherungsring
- 17: Clipverbindung

- S: Schwenkachse

## Patentansprüche

1. Lagermodul (4) zur drehbaren Lagerung eines Gepäckfachbehälters (2) in einem Gepäckfachgehäuse (3) um eine Schwenkachse (S), mit:
- einem gehäuseseitigen Lagerblock (5), welcher drehfest mit dem Gepäckfachgehäuse (3) verbindbar ist;
- einem Zwischenelement (7), welches eine erste Gleitfläche (9) aufweist; und
- einem behälterseitigen Lagerblock (10), welcher drehfest mit dem Gepäckfachbehälter (2) verbindbar ist und welcher eine zweite Gleitfläche (11) aufweist, wobei die erste Gleitfläche (9) und die zweite Gleitfläche (11) ein radiales Gleitlager (12) bilden;
**dadurch gekennzeichnet, dass**
- der gehäuseseitige Lagerblock (5) eine Lagertasche (6) aufweist;
- das Zwischenelement (7) eine Zunge (8) zum Eingriff in die Lagertasche (6) des gehäuseseitigen Lagerblocks (5) aufweist; und
- das Lagermodul (4) ferner eine Fixierschraube (13) zur Verschraubung des Zwischenelements (7) mit dem gehäuseseitigen Lagerblock (5) aufweist.

2. Lagermodul nach Anspruch 1, wobei zwischen der Lagertasche (6) des gehäuseseitigen Lagerblocks (5) und der Zunge (8) des Zwischenelements (7) eine Einrast-, Schnapp-, und/oder Clipverbindung (17) ausgebildet ist.

3. Lagermodul nach einem der vorhergehenden Ansprüche, wobei die Fixierschraube (13) eine in Richtung der Schwenkachse (S) verlaufende Längsachse, insbesondere eine parallel zur Schwenkachse (S) verlaufende Längsachse, aufweist.

4. Lagermodul nach einem der vorhergehenden Ansprüche, wobei die Fixierschraube (13) in einem Gewindeeinsatz (14) des gehäuseseitigen Lagerblocks (5) eingeschraubt ist.

5. Lagermodul nach einem der vorhergehenden Ansprüche, wobei die Fixierschraube (13) mit einem Federelement (15) vorgespannt ist.

6. Lagermodul nach einem der vorhergehenden Ansprüche, wobei die erste Gleitfläche (9) als außenliegende Mantelfläche eines Ringelements des Zwischenelements (7) und die zweite Gleitfläche (11) als innenliegende Mantelfläche eines Ringelements des behälterseitigen Lagerblocks (10) ausgebildet ist.

7. Lagermodul nach einem der vorhergehenden Ansprüche, wobei der behälterseitige Lagerblock (10) einen Sicherungsring (16) aufweist.

8. Lagermodul nach einem der vorhergehenden Ansprüche, wobei der gehäuseseitige Lagerblock (5), das Zwischenelement (7) und der behälterseitige Lagerblock (10) aus einem thermoplastischen Polymerwerkstoff, insbesondere aus einem glasfasergefüllten Polyphenylensulfid, bestehen.

9. Gepäckfachbaugruppe (1) für ein Flugzeug mit:
- einem Gepäckfachbehälter (2);
- einem Gepäckfachgehäuse (3); und
- mindestens einem Lagermodul (4) nach einem der Ansprüche 1 bis 8 zur drehbaren Lagerung des Gepäckfachbehälters (2) in dem Gepäckfachgehäuse (3) um eine Schwenkachse (S).

## Claims

1. Bearing module (4) for rotatably mounting a luggage compartment container (2) in a luggage compartment housing (3) about a pivot axis (S), comprising:
- a housing-side bearing block (5) which is connectable non-rotatably to the luggage compartment housing (3);
- an intermediate element (7) which has a first sliding surface (9); and
- a container-side bearing block (10) which is connectable non-rotatably to the luggage compartment container (2) and which has a second sliding surface (11), wherein the first sliding surface (9) and the second sliding surface (11) form a radial plain bearing (12);
**characterized in that**
- the housing-side bearing block (5) has a bearing pocket (6);
- the intermediate element (7) has a tongue (8) for engagement in the bearing pocket (6) of the housing-side bearing block (5); and
- the bearing module (4) furthermore has a fixing screw (13) for screwing the intermediate element (7) to the housing-side bearing block (5).

2. Bearing module according to Claim 1, wherein a latching, snap and/or clip connection (17) is formed between the bearing pocket (6) of the housing-side bearing block (5) and the tongue (8) of the intermediate element (7).

3. Bearing module according to either of the preceding claims, wherein the fixing screw (13) has a longitudinal axis running in the direction of the pivot axis (S), in particular a longitudinal axis running parallel to the pivot axis (S).

4. Bearing module according to one of the preceding claims, wherein the fixing screw (13) is screwed into a threaded insert (14) of the housing-side bearing block (5).

5. Bearing module according to one of the preceding claims, wherein the fixing screw (13) is pretensioned with a spring element (15).

6. Bearing module according to one of the preceding claims, wherein the first sliding surface (9) is designed as an outer lateral surface of a ring element of the intermediate element (7) and the second sliding surface (11) is designed as an inner lateral surface of a ring element of the container-side bearing block (10).

7. Bearing module according to one of the preceding claims, wherein the container-side bearing block (10) has a securing ring (16).

8. Bearing module according to one of the preceding claims, wherein the housing-side bearing block (5), intermediate element (7) and the container-side bearing block (10) are composed of a thermoplastic polymer material, in particular of a glass-fibre-filled polyphenylene sulphide.

9. Luggage compartment assembly (1) for an aircraft, comprising:
- a luggage compartment container (2);
- a luggage compartment housing (3); and
- at least one bearing module (4) according to one of Claims 1 to 8 for rotatably mounting the luggage compartment container (2) in the luggage compartment housing (3) about a pivot axis (S).

## Revendications

1. Module de palier (4) pour le support rotatif d'un contenant de compartiment à bagages (2) dans un boîtier de compartiment à bagages (3) autour d'un axe de pivotement (S), comprenant :
- un bloc palier (5) du côté du boîtier, qui peut être connecté de manière solidaire en rotation au boîtier de compartiment à bagages (3) ;
- un élément intermédiaire (7) qui présente une première surface de glissement (9) ; et
- un bloc palier (10) du côté du contenant, qui peut être connecté de manière solidaire en rotation au contenant de compartiment à bagages (2) et qui présente une deuxième surface de glissement (11), la première surface de glissement (9) et la deuxième surface de glissement (11) formant un palier lisse radial (12) ;
**caractérisé en ce que**
- le bloc palier (5) du côté du boîtier présente une cavité de palier (6) ;
- l'élément intermédiaire (7) présente une langue (8) destinée à s'engager dans la cavité de palier (6) du bloc palier (5) du côté du boîtier ; et
- le module de palier (4) présente en outre une vis de fixation (13) pour visser l'élément intermédiaire (7) au bloc palier (5) du côté du boîtier.

2. Module de palier selon la revendication 1, dans lequel, entre la cavité de palier (6) du bloc palier (5) du côté du boîtier et la langue (8) de l'élément intermédiaire (7) est réalisée une connexion par encliquetage, emboîtement, et/ou enclipsage (17).

3. Module de palier selon l'une quelconque des revendications précédentes, dans lequel la vis de fixation (13) présente un axe longitudinal s'étendant dans la direction de l'axe de pivotement (S), en particulier un axe longitudinal s'étendant parallèlement à l'axe de pivotement (S).

4. Module de palier selon l'une quelconque des revendications précédentes, dans lequel la vis de fixation (13) est vissée dans un insert fileté (14) du bloc palier (5) du côté du boîtier.

5. Module de palier selon l'une quelconque des revendications précédentes, dans lequel la vis de fixation (13) est précontrainte avec un élément de ressort (15).

6. Module de palier selon l'une quelconque des revendications précédentes, dans lequel la première surface de glissement (9) est réalisée sous forme de surface d'enveloppe extérieure d'un élément annulaire de l'élément intermédiaire (7) et la deuxième surface de glissement (11) est réalisée sous forme de surface d'enveloppe intérieure d'un élément annulaire du bloc palier (10) du côté du contenant.

7. Module de palier selon l'une quelconque des revendications précédentes, dans lequel le bloc palier (10) du côté du contenant présente une bague de fixation (16).

8. Module de palier selon l'une quelconque des revendications précédentes, dans lequel le bloc palier (5) du côté du boîtier, l'élément intermédiaire (7) et le bloc palier (10) du côté du contenant se composent d'un matériau polymère thermoplastique, en particulier d'un sulfure de polyphénylène chargé avec des fibres de verre.

9. Module de compartiment à bagages (1) pour un aéronef, comprenant :
- un contenant de compartiment à bagages (2) ;
- un boîtier de compartiment à bagages (3) ; et
- au moins un module de palier (4) selon l'une quelconque des revendications 1 à 8, pour le support rotatif du contenant de compartiment à bagages (2) dans le boîtier de compartiment bagages (3) autour d'un axe de pivotement (S).
